# EUROPEAN PATENT SPECIFICATION

(11) **EP 3 722 047 B1**
(45) Date of publication and mention of the grant of the patent: **18.08.2021**
(21) Application number: 20165128.8
(22) Date of filing: 24.03.2020
(51) Int. Cl.: B24B 3/54, B24B 41/06

(54) **A GRINDING JIG FOR A BLADE TOOL**
SCHLEIFVORRICHTUNG FÜR EIN KLINGENWERKZEUG
GABARIT DE MEULAGE POUR UN OUTIL À LAME

(30) Priority: 05.04.2019 SE 1950422
(43) Date of publication of application: 14.10.2020
(60) Divisional application: 21185345.2
(73) Proprietor: Tormek AB, 711 34 Lindesberg (SE)
(72) Inventor: PERSSON, Håkan, 711 31 LINDESBERG (SE)
(74) Representative: Ström & Gulliksson AB

(56) References cited:
- EP-A2- 0 214 943
- EP-A2- 2 660 005
- US-B2- 7 033 247

## Description

### Technical field

The present disclosure relates a grinding jig for a blade tool. The present disclosure also relates to a grinding machine with a grinding jig for a blade tool.

### Background art

Grinding of blade tool, such as knives, which has edges with opposite edge bevels is typically made by clamping the blade tool in a grinding jig and moving the tool across a revolving grindstone. When the edge bevel on the first side of the tool has been sharpened, the grinding jig is turned over and moved in opposite direction across the grindstone so that edge bevel on the second side of the blade tool is sharpened.

EP 0 214 943 A2 forms the basis for the preamble of claim 1 and is known in the existing art of grinding jigs for knives. According to this prior art document, a grinding jigs for knives is provided with a means of attachment intended for the knife and adapted to abut movably on a support fixedly secured to a grinding means upon grinding of a knife. According to this EP 0 214 943 A2, a shaft is provided with threads and a handle having a radially extending stop, the shaft being arranged to join the means of attachment to the handle so that they can be moved towards and away from each other.

Another prior art document, US 7 033 247 B2 relates to an electric sharpener, comprises a main frame, a main shaft, a motor, a transmission wheel, a grinding stone, and an electric control circuit. The motor is mounted on an angular frame, which in turn is mounted on the main frame. The transmission wheel is fixed to an end of the main shaft, and the output shaft of the motor is tightly pressed against the periphery of the transmission wheel so as to drive it. A tool rest is fixed onto the main frame in a vertical or horizontal mounting orientation. A water vessel is fixed to the main frame, and the lower portion of the grinding stone dips into the water contained in the water vessel. Special clamps and attachments for grinding different tools are provided. The electric sharpener can be used for grinding various woodworking or household tools.

Yet another prior art document EP 2 660 005 A2 describes a knife jig assembly for use in sharpening a knife in a grinding machine comprises a conventional knife jig with a clamp for clamping and holding an object. It also comprises a knife holder with means for holding the knife and with a flat rod to be clamped by the clamp of the knife jig.

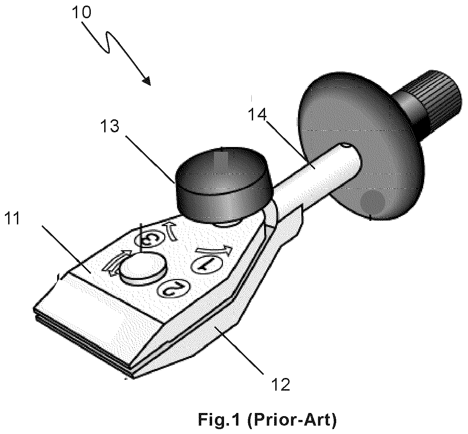

Figure 1 shows schematically an example of a conventional grinding jig 10, which comprises a lower clamp 12 that extends from a support pin 14 which in operation is guided on a transversal support bar of a grinding machine. An upper clamp half 11 is movable and may be forced against the lower clamp half by a screw 13 so that a blade tool (not shown) may be clamped by the upper and lower clamp halves.

While proven reliable in grinding operations, the conventional grinding jig has a drawback in that blade tool is not centered in the grinding jig. This has the effect that the angle between the blade and the grinding stone changes when the grinding jig (after completed grinding the first edge bevel) is turned over to grind the second edge bevel of the blade. The deviation of the edge bevel angles appears to increase with increasing blade thickness.

A further drawback with the conventional grinding jig is that it has shown to produce convex edges. The strength of the edge of the blade is reduced with increasing convexity.

Thus, there is a need for an improved grinding jig for blade tools.

Consequently, it is an object of the present disclosure to provide a grinding jig for blade tool that solves at least one of the problems of the prior-art.

In particular, it is an object of the present disclosure to provide a grinding jig, which achieves a strong edge of a blade tool after grinding.

In addition, it is an object of the present disclosure to provide a grinding jig for a blade tool, which achieves a minimum of difference between the angles of the edge bevels of the blade tool after grinding.

A further object of the present disclosure is to achieve a simple, yet robust, and easy to handle grinding jig for blade tools providing a minimum of difference between the angles of the edges of the blade tool after grinding.

### Summary of the invention

It is in view of the above considerations and others that the various aspects and embodiments of the present invention have been made. According to the present disclosure, at least one of the above-mentioned objects is met by a grinding jig as defined in the appended independent claim 1. Advantageous embodiments are defined in the appended dependent claims 2-10. According to the present disclosure, at least one of the above-mentioned objects is also met by a grinding machine as defined in the appended independent claim 11.

According to the present disclosure, a grinding jig is provided with the combination of features, as defined in claim 1.

The front end and rear end abutment surfaces allows the grinding jig to be moved in a controlled manner back and forth relative the support bar during grinding of the blade. Practical trials have shown that this controlled movement, limited between the front and rear abutment parts, results in that a convex bevel is achieved on the edges of the blade tool during grinding. Such convex edges are proven to be very strong.

It is appreciated that the grinding jig also may be moved back and forth along the support bar, in direction traverse to the longitudinal center axis Y of the grinding jig.

According to the invention, the grinding jig comprises a first and a second separate grinding jig half which are mutually facing each other and respectively comprises a clamp half and an elongate support portion half. The grinding jig is thereby arranged such that the first and the second grinding jig half are releasably forced towards each other to hold a tool blade between the first and a second clamp half. The first and second grinding jig half comprise a respective front abutment half and a respective rear abutment half, wherein the front abutment halves and the rear abutment halves are arranged spaced apart from each other on the respective support portion half and configured for abutment with a support bar of a grinding machine.

Thus, the grinding jig according to the invention comprises two separate jig halves which each include a clamp half and a support portion half. This has the effect that when a blade tool is clamped between the jig halves, both jig halves will be on the same distance from the center of the blade tool regardless the thickness of the blade. In particular, the first and the clamp will be on the same distance from the center of the blade and the first and second support portion will be on the same distance from the center of blade. Therefore, in a grinding operation there will be no, or negligible, change in angle between the blade and the grind stone regardless whether the first edge bevel or the second edge bevel of the blade is ground.

Further alternatives and advantages are disclosed in the appended claims and the following description.

### Brief description of the drawings

Figure. 1: A schematic drawing of a grinding jig according to the prior-art.
Figure 2a: A schematic drawing of a grinding machine including a grinding jig according to the present disclosure.
Figure 2b A schematic drawing of a grinding operation
Figure 3: A schematic exploded drawing of a grinding jig according to the present disclosure.
Figure 4: A schematic drawing of a grinding jig according to the present disclosure.

### Detailed description of embodiments

The grinding jig according to the present disclosure will now be described more fully hereinafter. The grinding jig according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

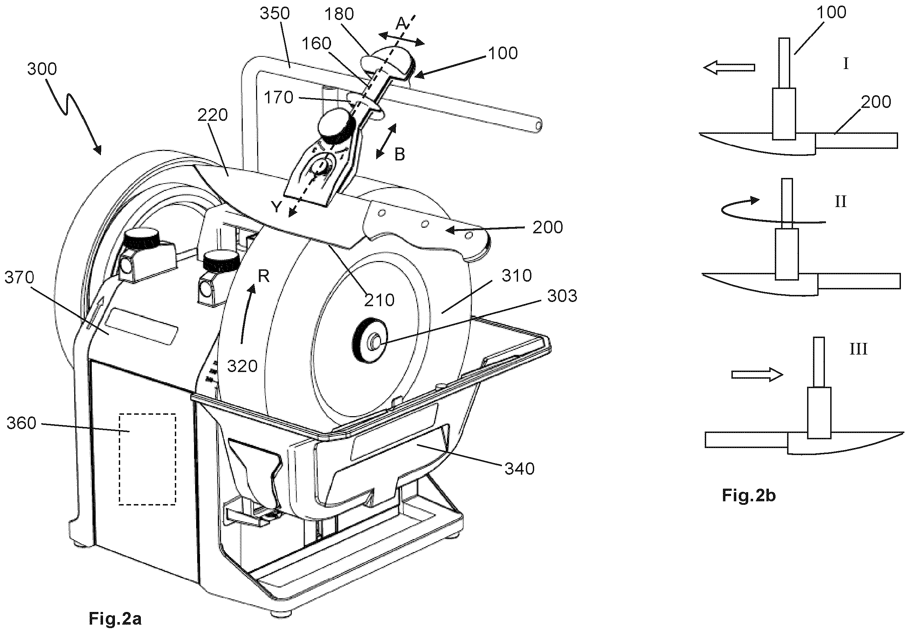

Figure 2a shows schematically a grinding machine 300 comprising a grinding jig 100 according to the present disclosure. A blade tool 200 to be ground is clamped in the grinding jig. The grinding machine 300 is of the bench type, i.e. it is of a design that allows it to be placed on a table in a workshop and to be operated manually by a person. The grinding machine 300 has a housing 370 and comprises a cylindrical grindstone 310 having a grinding surface 320. The grindstone 310 is rotated, in a rotation direction R, by a motor 360 which may be connected to a shaft 303 running through the center of the grindstone. The motor may for example be an electrical motor. A trough 340 for grinding liquid, such as water or oil, may be arranged underneath the grindstone. The grinding machine further comprises a support bar 350, also called universal support, for supporting the grinding jig 100. The support bar 300 extends over the grinding surface 320 traverse to the axis of rotation R of the grinding stone, i.e. parallel with the shaft 303. The grinding machine 300 may be any type of conventional grinding machine for grinding blade tools, such as knives. The knife may have a handle and a blade with a back and a symmetric edge (not shown) with two opposing edge bevels. Edge bevels may also be denominated "grind bevels". It is possible that the edge has one single edge bevel. The grinding machine may be a Tormek T-8 which is commercially available from the company Tormek AB.

In a grinding operation, as schematically indicated in figure 2a, the blade 200 is first (I) moved in a first direction (left) across the grindstone to grind a first side edge bevel of the blade. Then (II) the grinding jig 100 together with the blade is turned around. Subsequently (III), the blade 200 is moved in a second direction (right) across the grindstone to grind the second side edge bevel of the blade.

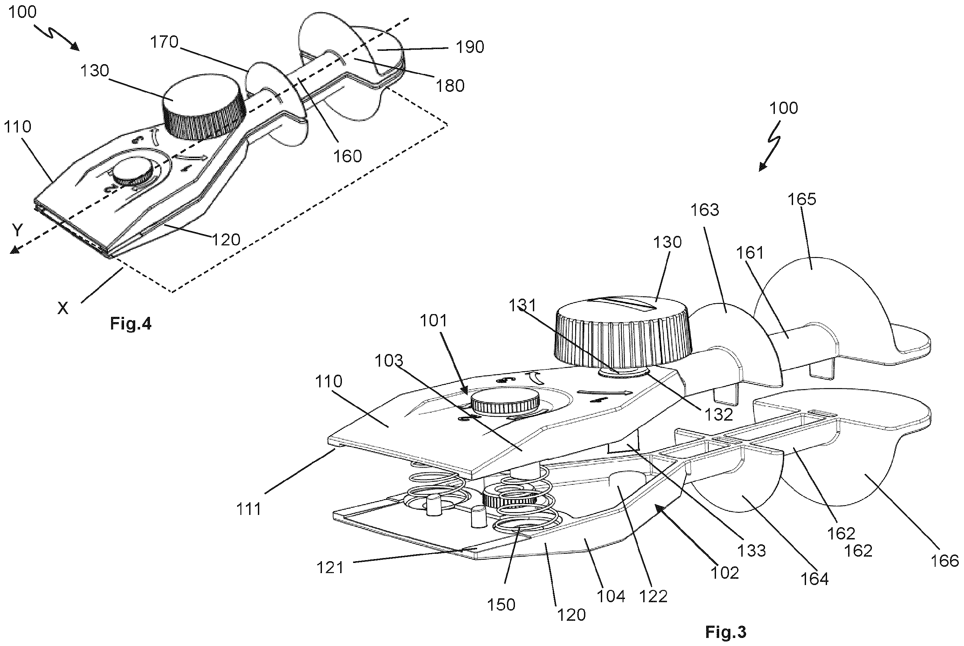

Figure 3 shows the grinding jig according to an alternative of the present disclosure in an exploded view. Thus, the grinding jig may comprise a first grinding jig half 101 and a second grinding jig half 102. The first and second grinding jig half are separate from each other, meaning that they are not permanently joined or attached to each other. The first and second grinding jig half are thus movable towards and away from each other. The first and the second grinding jig half 101, 102 may be essentially identical. Thus, the first and second grinding jig half 101, may comprises respectively a clamp half 110, 120 for clamping a portion of a blade. The first and second clamp half comprises respectively a contact surface 111, 121 which are configured to engage a portion of the blade tool when it is clamped. Clamping of the blade is made over the back of the blade. The first and second contact portion 111, 121 forms the front end of the grinding jig. The first and second clamp half 110, 120 are designed with a width that is suitable for stable clamping of a bladed tool. Each grinding jig half 101, 102 may further comprises a respective elongate support portion half 161, 162 which respectively extends from the first and second clamp half 110, 120 in opposite direction to the front end. The elongate support portions 161, 162 terminate in a rear end of the grinding jig. The clamp halves 110, 120 and the elongate support portions 161, 162 of the first and the second grinding jig halves 101, 102 may be attached to each other or formed integral to each other. For example, the respective grinding jig halves 101, 102 may be manufactured in one single piece by moulding. Alternatively, the clamp halves and the support halves may be manufactured separately and attached to each other by gluing or welding. The grinding jig halves may be manufactured in plastic such as poly-propene or in metal. Each grinding jig half 101, 102 may thus be an integral piece. As shown in figure 1, the first and the second grinding jig half 101, 102 may be formed as hollow shells and may have a respective circumferential border 103, 104. The contact portions 111, 121 may be part of the border 103, 104 of the respective grinding jig half.

The first and the second grinding jig half are arranged mutually facing each other. That is, such that the contact portion 111, 121 of the respective grinding jig half 101, 102 faces each other.

The grinding jig 100 may further comprises an actuator 130 which is arranged to releasably force the first and the second grinding jig half 101, 102 towards each other. The clamping halves 110, 120 of the respective first and second grinding jig half may thereby be brought together with sufficient force to securely hold a portion of blade tool. The actuator 130 is coupled to the first and the second grinding jig half such that it may bring and hold the first and second grinding jig half together and may release the first and second grinding jig half from each other. In the disclosed embodiment, the actuator 130 may be a screw which extends through an opening 131 in the first jig half 101. The screw may have a ring-shaped shoulder 132 that rests on the first grinding jig half 101. The end of the screw 133 has a threaded portion which engages a threaded opening 122 in the second grinding jig half 102. Turning of the actuator 130 in one direction forces the first and second grinding jig half 101, 102 towards each other. Turning of the actuator 130 in opposite direction releases the tension between the first and second grinding jig half 101, 102 and allows them to move away from each other.

A resilient member 150 may be arranged between the first and second grinding jig half 101,102 for biasing the grinding jig halves away from each other.

The actuator 130 for releasably forcing the first and the second grinding jig half 101, 102 towards each other may be realized in other modes. For example, the actuator may be cam-lever arrangement or a ratchet arrangement.

Each grinding jig half 101, 102 may further comprise a respective front abutment half 163, 164 and a respective rear abutment part 165, 166. The front abutment halves 163, 164 and the rear abutment halves 165, 166 are arranged spaced apart from each other on the respective support portion half 161, 162. The front and rear abutment halves protrude perpendicular from the respective support portion half 161 and 162 and may be in the form of half discs.

Figure 4 shows the grinding jig 100 according to the present disclosure in assembled state. Thus, the grinding jig 100, comprises a first and second clamp half 110, 120 for clamping a portion of a blade. The first and second clamp half comprises respectively a contact surface 111, 121 (see figure 3) for engaging the back of a blade tool such as a knife or a scissor. The first and second contact portion 111, 121 forms the front end of the grinding jig. The grinding jig 100 further comprises an elongate support portion 160 which may be rod-shaped. The support portion 160 extends from the first and second clamp half 110, 120 in direction opposite to the front end of the grinding jig. The support portion 160 terminates in a rear end of the grinding jig. In use, the support portion 160 is intended to be supported onto the support bar of a grinding machine and there by assist the operator thereof to maintain the angle of a blade relative the grindstone.

The elongated support portion 160 comprises a front end abutment surface 170 and a rear end abutment surface 180. The front and rear end abutment surfaces 170, 180 are spaced apart such that a portion of a support bar of a grinding machine may be received there between. The front and rear end abutment surfaces 170, 180 are thereby spaced apart sufficiently to allow the operator to move the grinding jig 100 back and forth relative the support bar 350.

In detail, the front and rear end abutment surfaces 170, 180 are aligned along a longitudinal center axis Y of the grinding jig 100. The axis Y extends through the front end of the grinding jig, the clamp halves 110, 120, the support portion 160 and the rear end of the grinding jig. The rear end abutment surface 180 is thereby arranged after the rear end 190 of the grinding jig and the front end abutment surface 170 is arranged after the rear end abutment surface 180 and the clamp halves 110, 120 are arranged after the front end abutment surface 170.

The front and rear end abutment surfaces may extend perpendicular from the support portion 160 and around its circumferential and may thereby have the form of discs. The distance, by which the front and the rear end abutment surfaces are spaced apart is selected such that the distance is greater than the diameter of the support bar of a grinding machine and such that it allows a slight movement back and forth of the grinding jig 100 when it is supported on the support bar. For example, the distance between the front and rear end abutment surfaces is 2 - 5 cm. The height of the front and rear end abutment surfaces 170, 180 is selected such the support bar of a grinding machine is prevented from passing beyond the front and rear end abutment surfaces 170, 180 when the grinding jig is 100 is moved back and forth relative the support bar. For example, the height is 1 - 2 cm.

The rear end of the support portion 160 may terminate in a handle portion 190 which is configured to be griped by an operator of the grinding jig.

The grinding jig may be split into two separate halves that are on opposite sides of a central plane x extending through the center of the grinding jig.

The advantage of the spaced apart front and rear abutment surfaces 170, 180 is that they make possible to achieve convex edge bevels during grinding of bladed tools.

The function of the grinding jig 100 according to the present disclosure is in the following described with reference to figure 2a. Thus, in a grinding operation, the operator supports the elongated support portion 160 of the grinding jig onto the support bar 350 such that the bevel 210 of the bladed tool 200 is resting in a proper angle on the surface 320 of the grindstone 310. The operator may then move the grinding jig 100 along the support bar 350 back and forth in direction traverse to the longitudinal axis Y of the grinding jig 100 as indicated by arrow A. In other words, traverse to the rotating direction R of the grindstone 310.

Simultaneously, the operator may move the grinding jig 100 relative the support bar 350 back and forth in direction parallel with the longitudinal axis Y of the grinding jig 100 as indicated by arrow B. In other words, parallel with the rotation direction R of grindstone 310.

The movement back and forth of the grinding jig 100 relative the support bar 350 in direction parallel with its longitudinal axis Y is restricted by the front and rear end abutment surfaces 170, 180 of the grinding jig 10. The rear end abutment surface 180 there by restricts movement of the grinding jig in one direction, e.g. away from the support bar 350, The front end abutment surface 170 restricts movement in opposite direction, e.g. towards the support bar 350.

The movement back and forth of the grinding jig 100 in direction parallel with its longitudinal axis Y results in an edge with convex edge bevels after grinding. Edges with convex edge bevels are stronger than edges with concave or straight edge bevels.

The front and rear end abutments surfaces 170, 180 thereby assists the operator to control the movement of the grinding jig 100 such that a beveled edge 210 is achieved on the bladed tool 220. The distance between the front and rear abutment surfaces 170, 180 controls the shape of the final edge and may be selected on basis of practical trials.

Although a particular embodiment has been disclosed in detail this has been done for purpose of illustration only, and is not intended to be limiting. In particular, it is contemplated that various substitutions, alterations and modifications may be made within the scope of the appended claims.

## Claims

1. A grinding jig (100) for holding a blade tool (200) having an edge (210) in a grinding machine (300), said grinding machine having a grindstone (210) and a support bar (350) for supporting a grinding jig, said grinding jig (100) comprising:
- a first and a second clamp half (110, 120) arranged to hold between them at least a portion of a blade tool, and;
- an elongate support portion (160) for supporting the grinding jig (100) onto a support bar (350) of a grinding machine (300), wherein;
- the elongate support portion (160) comprises a front end abutment surface (170) and a rear end abutment surface (180) for abutment against a support bar (350) of a grinding machine (300), wherein;
- the front and rear end abutment surfaces (170, 180) are spaced apart such that a portion of a support bar (350) of a grinding machine (300) may be received between the front and rear end abutment surfaces (170, 180) and such that the grinding jig (100) may be moved back and forth relative the support bar (350), in direction parallel with the longitudinal center axis (Y) of the grinding jig (100),
**characterized in that** the grinding jig (100) comprises:
- a first and a second separate grinding jig half (101, 102) which are mutually facing each other and respectively comprises a clamp half (110, 120) and an elongate support portion half (161, 162), wherein;
- the grinding jig (100) is arranged such that the first and the second grinding jig half (101, 102) may be releasably forced towards each other to hold a tool blade between the first and a second clamp half (110, 120) and wherein the first and second grinding jig half (101, 102) comprise a respective front abutment half (163, 164) and a respective rear abutment half (165, 166), wherein the front abutment halves (163, 164) and the rear abutment halves (165, 166) are arranged spaced apart from each other on the respective support portion half (161, 162) and configured for abutment with a support bar (350) of a grinding machine (300).

2. The grinding jig (100) according to claim 1, whereby movement of the grinding jig (100) in one direction is limited by one of the front and rear end abutment surfaces (170, 180) and movement of the grinding jig (100) in the opposite direction is limited by the other of the front and rear end abutment surfaces (170, 180).

3. The grinding jig (100) according to claim 1 or 2, wherein the front and rear end abutment surfaces (170, 180) respectively extend around the circumferential of the support portion (160).

4. The grinding jig (100) according to anyone of claims 1 - 3 wherein the front end and the rear end abutment surfaces (170, 180) extends perpendicular from the support portion (160).

5. The grinding jig (100) according to anyone of claims 1-4, wherein the clamp halves (110, 120) comprises a respective contact surface (111, 121) for engagement with a side of a blade tool and wherein the respective support portion half (161, 162) extends from the respective clamp half (110, 120) opposite to the contact surfaces (111, 121).

6. The grinding jig (100) according to any preceding claim, wherein the respective clamp half (110, 120) is attached to or formed integral with the respective support portion half (161, 162).

7. The grinding jig (100) according to any preceding claim, wherein the first and the second grinding jig half (101, 102) are identical.

8. The grinding jig (100) according to any preceding claim, comprising an actuator (130) coupled to the first and second jig half (101, 102) and arranged to releasable force the first and second jig half (101, 102) towards each other.

9. The grinding jig (100) according to any preceding claim, comprising a resilient member (150) for biasing the first and second jig half (101, 102) away from each other.

10. The grinding jig (100) according to anyone of claims 1 - 9, wherein the blade tool (200) is a knife.

11. A grinding machine (300) comprising a grindstone (310), a motor for rotating the grindstone and a support bar (350) for supporting a grinding jig (100), **characterized in that** the grinding machine (300) comprises a grinding jig (100) according to any of claims 1 - 10.

## Patentansprüche

1. Schleifführung (100) zum Halten eines Klingenwerkzeugs (200) mit einer Schneide (210) in einer Schleifmaschine (300), wobei die Schleifmaschine einen Schleifstein (210) und eine Stützstange (350) zum Abstützen einer Schleifführung aufweist, wobei die Schleifführung (100) umfasst:
- eine erste und eine zweite Klammerhälfte (110, 120), die angeordnet sind, um zwischen ihnen wenigstens einen Teil eines Klingenwerkzeugs zu halten, und
- einen länglichen Stützabschnitt (160) zum Abstützen der Schleifführung (100) auf einer Stützstange (350) einer Schleifmaschine (300), wobei
- der längliche Stützabschnitt (160) eine vordere Endanlagefläche (170) und eine hintere Endanlagefläche (180) zur Anlage an einer Stützstange (350) einer Schleifmaschine (300) umfasst, wobei
- die vordere und die hintere Endanlagefläche (170, 180) derart voneinander beabstandet sind, dass ein Abschnitt einer Stützstange (350) einer Schleifmaschine (300) zwischen der vorderen und hinteren Endanlagefläche (170, 180) aufgenommen werden kann, und dass die Schleifführung (100) relativ zu der Stützstange (350) in einer Richtung parallel zu der Längsmittelachse (Y) der Schleifführung (100) hin und her bewegt werden kann,
**dadurch gekennzeichnet, dass** die Schleifführung (100) umfasst:
erste und eine zweite voneinander getrennte Schleifführungshälften (101, 102), die einander zugewandt sind und jeweils eine Klammerhälfte (110, 120) und eine längliche Stützabschnittshälfte (161, 162) umfassen, wobei
die Schleifführung (100) derart angeordnet ist, dass die erste und die zweite Schleifführungshälfte (101, 102) lösbar einander entgegen gedrängt werden können, um eine Werkzeugklinge zwischen der ersten und einer zweiten Klammerhälfte (110, 120) zu halten, und wobei die erste und zweite Schleifführungshälfte (101, 102) jeweils eine vordere Anlagehälfte (163, 164) und eine hintere Anlagehälfte (165, 166) aufweisen, wobei die vorderen Anlagehälften (163, 164) und die hinteren Anlagehälften (165, 166) voneinander beabstandet an der jeweiligen Stützabschnittshälfte (161, 162) angeordnet und zum Anliegen an einer Stützstange (350) einer Schleifmaschine (300) ausgebildet sind.

2. Schleifführung (100) nach Anspruch 1, wobei die Bewegung der Schleifführung (100) in eine Richtung durch eine der vorderen und hinteren Endanlageflächen (170, 180) begrenzt ist und die Bewegung der Schleifführung (100) in die entgegengesetzte Richtung durch die andere der vorderen und hinteren Endanlageflächen (170, 180) begrenzt ist.

3. Schleifführung (100) nach Anspruch 1 oder 2, wobei sich die vordere und hintere Endanlagefläche (170, 180) jeweils um den Umfang des Stützabschnittes (160) erstrecken.

4. Schleifführung (100) nach einem der Ansprüche 1 bis 3, wobei sich die vordere und die hintere Endanlagefläche (170, 180) senkrecht von dem Stützabschnitt 10 (160) erstrecken.

5. Schleifführung (100) nach einem der Ansprüche 1-4, wobei die Klammerhälften (110, 120) eine jeweilige Kontaktfläche (111, 121) zum Eingriff mit einer Seite eines Klingenwerkzeugs aufweisen und wobei sich die jeweilige Stützabschnittshälfte (161, 162) von der jeweiligen Klammerhälfte (110, 120) entgegengesetzt zu den Kontaktflächen (111, 121) erstreckt.

6. Schleifführung (100) nach einem der vorhergehenden Ansprüche, wobei die jeweilige Klammerhälfte (110, 120) an der jeweiligen Stützabschnittshälfte (161, 162) befestigt oder einstückig mit dieser ausgebildet ist.

7. Schleifführung (100) nach einem der vorhergehenden Ansprüche, wobei die erste und die zweite Schleifführungshälfte (101, 102) identisch sind.

8. Schleifführung (100) nach einem der vorhergehenden Ansprüche, umfassend einen Aktuator (130), der mit der ersten und der zweiten Führungshälfte (101, 102) gekoppelt und angeordnet ist, um die erste und die zweite Führungshälfte (101, 102) lösbar einander entgegen zu drängen.

9. Schleifführung (100) nach einem der vorhergehenden Ansprüche, umfassend ein elastisches Element (150), um die erste und zweite Führungshälfte (101, 102) voneinander weg vorzuspannen.

10. Schleifführung (100) nach einem der Ansprüche 1 bis 9, wobei das Klingenwerkzeug (200) ein Messer ist.

11. Schleifmaschine (300) mit einem Schleifstein (310), einem Motor zum Drehen des Schleifsteins und einer Stützstange (350) zum Stützen einer Schleifführung (100), **dadurch gekennzeichnet, dass** die Schleifmaschine (300) eine Schleifführung (100) nach einem der Ansprüche 1 bis 10 umfasst.

## Revendications

1. Gabarit de meulage (100) pour maintenir un outil à lame (200) ayant un bord (210) dans une machine de meulage (300), ladite machine de meulage ayant une meule (210) et une barre de support (350) pour supporter un gabarit de meulage, ledit gabarit de meulage (100) comprenant :
une première et une seconde moitié de dispositif de serrage (110, 120) agencées pour maintenir entre elles au moins une partie d'un outil à lame, et
une partie de support allongée (160) pour supporter le gabarit de meulage (100) sur une barre de support (350) d'une machine de meulage (300), dans lequel :
la partie de support allongée (160) comprend une surface de butée d'extrémité avant (170) et une surface de butée d'extrémité arrière (180) pour la butée contre une barre de support (350) d'une machine de meulage (300), dans lequel :
les surfaces de butée d'extrémité avant et arrière (170, 180) sont espacées de sorte qu'une partie d'une barre de support (350) d'une machine de meulage (300) peut être reçue entre les surfaces de butée d'extrémité avant et arrière (170, 180) et de sorte que le gabarit de meulage (100) peut être déplacé vers l'avant et vers l'arrière par rapport à la barre de support (350), dans une direction parallèle à l'axe central longitudinal (Y) du gabarit de meulage (100) ;
**caractérisé en ce que** le gabarit de meulage (100) comprend :
une première et une seconde moitié de gabarit de meulage (101, 102) séparées qui se font mutuellement face et comprennent respectivement une moitié de dispositif de serrage (110, 120) et une moitié de partie de support allongée (161, 162), dans lequel :
le gabarit de meulage (100) est agencé de sorte que la première et la seconde moitié de gabarit de meulage (101, 102) peuvent être forcées, de manière détachable, l'une vers l'autre pour maintenir une lame d'outil entre la première et la seconde moitié de dispositif de serrage (110, 120) et dans lequel la première et la seconde moitié de gabarit de meulage (101, 102) comprennent une moitié de butée avant (163, 164) respective et une moitié de butée arrière (165, 166) respective, dans lequel les moitiés de butée avant (163, 164) et les moitiés de butée arrière (165, 166) sont agencées espacées les unes des autres sur la moitié de partie de support (161, 162) respective et configurées pour venir en butée contre une barre de support (350) d'une machine de meulage (300).

2. Gabarit de meulage (100) selon la revendication 1, moyennant quoi le déplacement du gabarit de meulage (100) dans une direction est limité par l'une des surfaces de butée d'extrémité avant et arrière (170, 180) et le déplacement du gabarit de meulage (100) dans la direction opposée est limité par l'autre parmi les surfaces de butée d'extrémité avant et arrière (170, 180).

3. Gabarit de meulage (100) selon la revendication 1 ou 2, dans lequel les surfaces de butée d'extrémité avant et arrière (170, 180) s'étendent respectivement autour de la circonférence de la partie de support (160).

4. Gabarit de meulage (100) selon l'une quelconque des revendications 1 à 3, dans lequel les surfaces de butée d'extrémité avant et d'extrémité arrière (170, 180) s'étendent perpendiculairement à partir de la partie de support (160).

5. Gabarit de meulage (100) selon l'une quelconque des revendications 1 à 4, dans lequel les moitiés de dispositif de serrage (110, 120) comprennent une surface de contact (111, 121) respective pour la mise en prise avec un côté d'un outil à lame et dans lequel la moitié de partie de support (161, 162) respective s'étend à partir de la moitié de dispositif de serrage (110, 120) respective opposée aux surfaces de contact (111, 121).

6. Gabarit de meulage (100) selon l'une quelconque des revendications précédentes, dans lequel la moitié de dispositif de serrage (110, 120) respective est fixée à ou formée de manière solidaire avec la moitié de partie de support (161, 162) respective.

7. Gabarit de meulage (100) selon l'une quelconque des revendications précédentes, dans lequel la première et la seconde moitié de gabarit de meulage (101, 102) sont identiques.

8. Gabarit de meulage (100) selon l'une quelconque des revendications précédentes, comprenant un actionneur (130) couplé à la première et à la seconde moitié de gabarit (101, 102) et agencé pour forcer, de manière détachable, la première et la seconde moitié de gabarit (101, 102) l'une vers l'autre.

9. Gabarit de meulage (100) selon l'une quelconque des revendications précédentes, comprenant un élément résilient (150) pour solliciter la première et la seconde moitié de gabarit (101, 102) à l'opposé l'une de l'autre.

10. Gabarit de meulage (100) selon l'une quelconque des revendications 1 à 9, dans lequel l'outil à lame (200) est un couteau.

11. Machine de meulage (300) comprend une meule (310), un moteur pour faire tourner la meule et une barre de support (350) pour supporter un gabarit de meulage (100), **caractérisé en ce que** la machine de meulage (300) comprend un gabarit de meulage (100) selon l'une quelconque des revendications 1 à 10.
